# EUROPÄISCHE PATENTSCHRIFT

(11) **EP 1 720 146 B1**
(45) Veröffentlichungstag und Bekanntmachung des Hinweises auf die Patenterteilung: **30.09.2009**
(21) Anmeldenummer: 05009826.8
(22) Anmeldetag: 04.05.2005
(51) Int. Cl.: G09F 15/00, E06B 3/96

(54) **Bildanzeigevorrichtung**
Image display device
Dispositif d'affichage d'images

(43) Veröffentlichungstag der Anmeldung: 08.11.2006
(73) Patentinhaber: ALTEC Mittig und Manger GmbH, 07924 Crispendorf (DE)
(72) Erfinder: Wellhöfer, Stefan, 99195 Schlossvippach (DE)
(74) Vertreter: Wächter, Jochen

(56) Entgegenhaltungen:
- EP-A- 1 420 140
- DE-U- 7 000 649
- FR-A- 2 485 612
- GB-A- 1 470 841

## Beschreibung

Die Erfindung betrifft eine Bildanzeigevorrichtung mit einer Anzeigeeinheit, einem Rahmen zur Umrahmung der Anzeigeeinheit sowie einer Rückwand. Insbesondere betrifft die Erfindung Flachbildschirme.

Derartige Bildanzeigevorrichtungen sind seit langem bekannt und werden zur Darstellung von allen Arten von Bildformaten eingesetzt, z.B. als LCD-Fernseher, Plasmafernseher oder entsprechende Monitore für Computer. Die Fertigung derartiger Bildanzeigevorrichtungen erfordert üblicherweise einen erheblichen Aufwand, da zunächst die Profilleisten des Rahmens der Bildanzeigevorrichtung direkt oder über Winkelverbinder miteinander verschweißt, verklebt oder verpresst werden müssen, um eine sichere Verbindung herzustellen. Anschließend muss die Anzeigeeinheit selbst mit diesem Rahmen auf sichere Weise verbunden werden. Insgesamt erfordert der Zusammenbau einen relativ hohen Arbeits- und Kostenaufwand, und ein Zerlegen der Bildanzeigevorrichtung bei notwendigen Reparaturen ist ebenfalls zeit- und kostenintensiv.

Zur Vereinfachung des Zusammenbaus wurde in der EP 1 420 140 B1 ein Rahmen vorgeschlagen, der aus Profilleisten besteht, die an ihren Stirnseiten miteinander verbunden sind, wobei zwischen den Stirnseiten zweier aneinandergrenzender Profilleisten jeweils ein Winkelverbinder angeordnet ist. Die Profilleisten weisen an ihrer Innenseite einen Kanal auf, in dem ein Spannelement verläuft, so dass das Spannelement von der Innenseite des Rahmens her zugänglich ist und es die Profilleisten von der Innenseite des Rahmens her miteinander verspannt. Auch wenn hierdurch eine vereinfachte Montage des Rahmens im Vergleich zu konventionellen Methoden möglich ist, so ist doch der erhöhte Anteil an Bauteilen und die Einschränkung auf ein nachträgliches Einfügen der Anzeigeeinheit nachteilig.

Aus der GB-A-1 470 841 ist außerdem ein Fensterrahmen bekannt, bei dem die vier Profilleisten mittels eines außen umlaufenden Spannbands zusammengehalten werden.

Der vorliegenden Erfindung liegt die Aufgabe zugrunde, eine Bildanzeigevorrichtung zu schaffen, die besonders einfach zusammengebaut und wieder zerlegt werden kann und bei der die Herstellungskosten insgesamt deutlich reduziert werden.

Diese Aufgabe wird durch die Merkmale des Anspruchs 1 gelöst.

Erfindungsgemäß weist die Bildanzeigevorrichtung eine Anzeigeeinheit auf, einen Rahmen zur Umrahmung der Anzeigeeinheit sowie eine Rückwand, wobei der Rahmen und/oder die Rückwand mit dem Rahmen verbunden ist und der Rahmen aus länglichen Profilleisten gebildet ist, die an ihren Stirnseiten miteinander verbunden sind und mittels eines Spannbands zusammengehalten werden, das auf einem ersten Schenkel der Profilleisten außen umlaufend angeordnet ist.

Dadurch ist es möglich, die einzelnen Profilleisten bereits vor der Montage vollständig zu beschichten, einen einfachen und kostengünstigen Zusammenbau der Bildanzeigevorrichtung zu ermöglichen und mehrere Anordnungsmöglichkeiten der Anzeigeeinheit am Rahmen zu ermöglichen.

Die Profilleisten sind zudem im wesentlichen winkelförmig mit dem ersten und einem zweiten Schenkel ausgebildet. Dadurch wird zum einen die Stabilität der Profilleisten erhöht, und zum anderen kann der zweite Schenkel in seiner Länge variiert werden, um sich den gewünschten Abmessungen der Anzeigeeinheit anzupassen.

Außerdem ist im Bereich des Scheitels einer Profilleiste ein winkelförmiger Außenfortsatz zum Bilden einer Ausnehmung vorgesehen, in die die Rückwand eingeführt ist. Dadurch wird auf besonders einfache Weise eine Verbindung zwischen Rückwand und Rahmen hergestellt, die ohne nach außen sichtbare Verbindungselemente auskommt.

Vorzugsweise weist der erste Schenkel an seiner Außenseite einen Kanal auf, in dem das Spannband verläuft, wodurch eine sichere Führung des Spannbands gewährleistet und ein seitliches Verrutschen desselben verhindert wird.

Die Stirnseiten der Profilleisten sind vorteilhafterweise unter einem Winkel von etwa 45° abgeschrägt, so dass sich eine 90°-Außenkante zwischen aneinandergrenzenden Profilleisten ergibt. Dies ermöglicht das direkte Zusammensetzen der Profilleisten ohne dazwischen angeordnete Winkelverbinder.

Vorzugsweise ist das Spannband aus Kunststoff, mehr bevorzugt aus PET, gebildet, wodurch zum einen eine sichere und dauerhafte Vorspannung der Systemkomponenten sichergestellt und zum anderen ein einfacher Austausch gewährleistet wird.

Vorzugsweise kann nach der vorliegenden Erfindung die Anzeigeeinheit auch mittels der Kraft des Spannbandes von mindestens zwei ersten Schenkeln der Profilleisten fixiert und gehalten werden. Dadurch wird die Befestigung der Anzeigeeinheit am Rahmen ein integraler Bestandteil des Rahmenzusammenbaus und es ist keine weitere Montagehandlung notwendig.

Vorteilhafterweise sind Halterungsleisten an der Anzeigeeinheit befestigt, die in Eingriff mit einem Kanal an der Innenseite des ersten Schenkels der Profilleisten stehen, wodurch eine sichere Ausrichtung der Anzeigeeinheit bezüglich der Profilleisten gewährleistet wird.

Die Halterungsleisten weisen vorzugsweise nach außen gerichtete Federzungen auf, die im Kanal an der Innenseite des ersten Schenkels der Profilleisten festgelegt sind, so dass auf einfache Weise eine dauerhafte Verbindung zwischen Anzeigeeinheit und Profilleisten erzielt wird.

Es ist von Vorteil, dass im Bereich des Scheitels einer Profilleiste innenseitig eine Rille vorgesehen ist, in die ein Ausrichtrahmen eingeführt ist. Dieses Merkmal ist besonders vorteilhaft für die Zusammensetzung der Bildanzeigevorrichtung, da die Profilleisten zunächst auf den Ausrichtrahmen aufgesteckt und ausgerichtet werden können, bevor das Spannband festgezogen wird, ohne dass eine nachträgliche Entfernung des Ausrichtrahmens notwendig wird. Dieser Ausrichtrahmen kann auch als eine Art Passepartout über den zweiten Schenkel der Profilleisten nach innen vorstehen und eine beliebige Farbe aufweisen.

Weitere Einzelheiten, Merkmale und Vorteile der vorliegenden Erfindung ergeben sich aus der nachfolgenden Beschreibung unter Bezugnahme auf die Zeichnungen.
- Fig. 1: ist eine Frontansicht einer erfindungsgemäßen Bildanzeigevorrichtung;
- Fig. 2: ist eine schematische Perspektivansicht, teilweise im Querschnitt dargestellt, einer erfindungsgemäßen Bildanzeigevorrichtung;
- Fig. 3: ist eine Querschnittsansicht entlang Linie C-C aus Fig. 1;
- Fig. 4: ist eine Perspektivansicht lediglich des Rahmens einer erfindungsgemäßen Bildanzeigevorrichtung;
- Fig. 5: ist eine vergrößerte Ansicht des mit B gekennzeichneten Ausschnitts aus Fig. 4;
- Fig. 6: ist eine Perspektivansicht, teilweise im Querschnitt dargestellt, einer Profilleiste und einer Rückwand einer erfindungsgemäßen Bildanzeigevorrichtung;
- Fig. 7: ist eine vergrößerte Darstellung des mit E gekennzeichneten Ausschnitts aus Fig. 2;
- Fig. 8: ist eine vergrößerte Querschnittsansicht des mit D gekennzeichneten Ausschnitts aus Fig. 3; und
- Fig. 9: ist eine Darstellung einer Halteleiste der Anzeigeeinheit gemäß einer Ausführungsform der Erfindung.

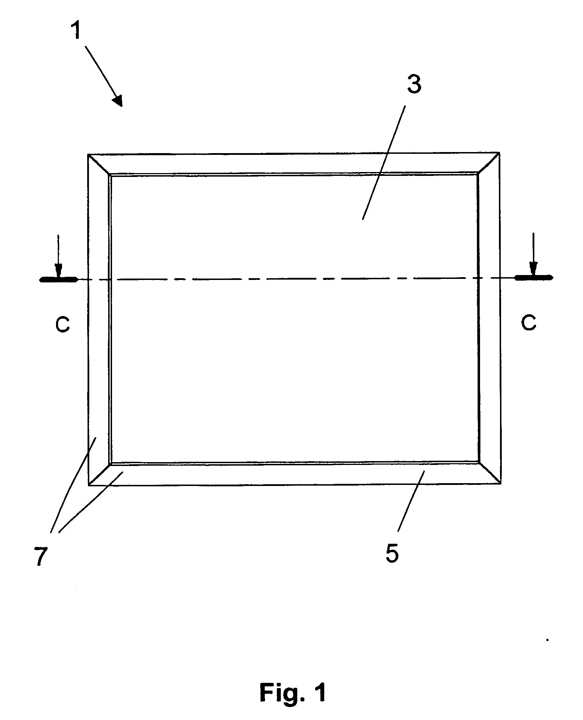

In den Fig. 1 bis 9 ist eine bevorzugte Ausführungsform der Erfindung detailliert dargestellt.

In Fig. 1 ist eine erfindungsgemäße Bildanzeigevorrichtung 1 in Frontansicht dargestellt. Die Bildanzeigevorrichtung 1 besteht aus einer Anzeigeeinheit 3, die üblicherweise als LCD Panel oder Plasmapanel mit einer vorgelagerten Schutzscheibe ausgebildet ist. Die transparente Schutzscheibe ist hierbei üblicherweise auf das Panel aufgeklebt. Die Bildanzeigevorrichtung 1 weist weiterhin einen Rahmen 5 auf, der zur Umrahmung der Anzeigeeinheit 3 dient und im vorliegenden Beispielsfall aus vier länglichen geraden Profilleisten 7 zusammengesetzt ist. Diese Profilleisten 7 bestehen z.B. aus Aluminium und sind an ihren Stirnseiten unter einem Winkel von etwa 45° abgeschrägt, so dass sich zwischen aneinandergrenzenden Profilleisten 7 eine 90°-Außenkante ergibt. Es sind jedoch auch Konstruktionen denkbar, bei denen eine Rundung anstelle der Kante im Übergangsbereich zwischen zwei Profilleisten 7 vorliegt. Der Einsatz von Winkelverbindern ist ebenfalls nicht ausgeschlossen. Der Rahmen 5 sollte auch dicht gegenüber elektromagnetischer Strahlung sein.

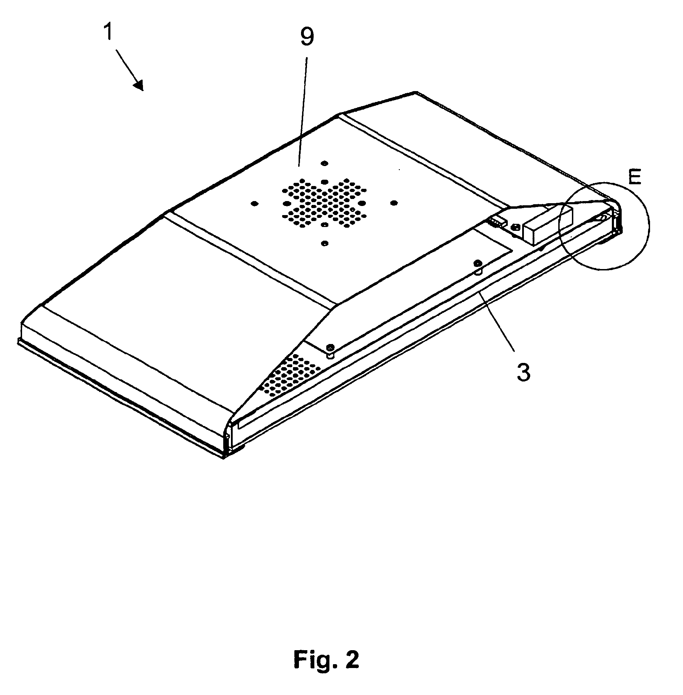

Wie aus Fig. 2 ersichtlich ist, weist die Bildanzeigevorrichtung 1 außerdem eine Rückwand 9 auf, die mit dem Rahmen 5 verbunden ist. Diese Rückwand 9 kann einstückig ausgebildet oder aus mehreren Teilen zusammengesetzt sein und ist auf allen vier Seiten mit dem Rahmen 5 verbunden.

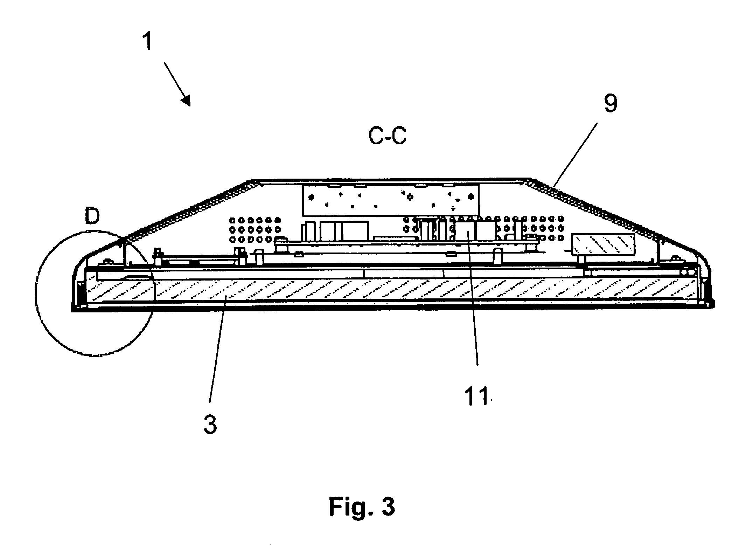

Wie aus der in Fig. 3 dargestellten Querschnittsansicht gemäß Linie C-C aus Fig. 1 ersichtlich ist, sind zwischen der Anzeigeeinheit 3 und der Rückwand 9 im Zwischenraum die erforderlichen elektrischen/elektronischen Einheiten 11 für den Betrieb der Bildanzeigevorrichtung 1 angeordnet.

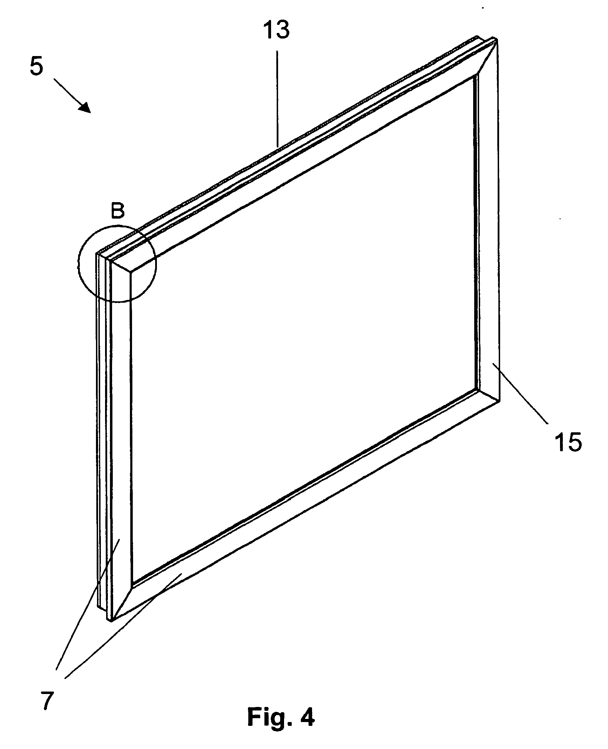

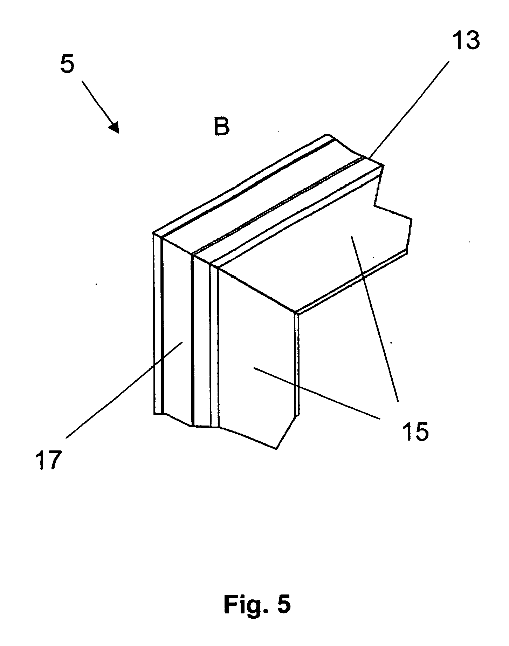

Aus Fig. 4 und der vergrößerten Darstellung des Bereichs B in Fig. 5 ist die äußere Struktur des Rahmens 5 einer erfindungsgemäßen Bildanzeigevorrichtung 1 erkennbar. Die Profilleisten 7 sind winkelförmig ausgebildet und weisen einen ersten Schenkel 13 und einen sich im wesentlichen rechtwinklig hierzu erstreckenden zweiten Schenkel 15 auf. Während der zweite Schenkel 15 zur Definition des sichtbaren Bereichs der Anzeigeeinheit 3 sowie zur Versteifung dient, ist außen umlaufend um den ersten Schenkel 13 einer jeden Profilleiste 7 ein Spannband 17 angeordnet und straffgezogen. Die einzelnen Profilleisten 7 werden dadurch passgenau miteinander verbunden und dauerhaft gegen eine gegenseitige Verschiebung gesichert. Das Spannband 17 sollte bis zu einem gewissen Umfang elastische Eigenschaften besitzen, aber dennoch besonders zug- und reißfest sowie stabil sein, da auch bei Dauerbelastung eine sichere Verbindung der Profilleisten 7 ohne ein Ausleiern des Spannbandes 17 gewährleistet sein muss. Hierfür sind mehrere Kunststoffmaterialien geeignet, insbesondere ist ein Spannband 17 aus PET (Polyethylenterephthalat) besonders geeignet. Im vorliegenden Beispielsfall wurde ein Band mit einer Breite von ca. 12 mm und einer Dicke von ca. 0,75 mm verwendet.

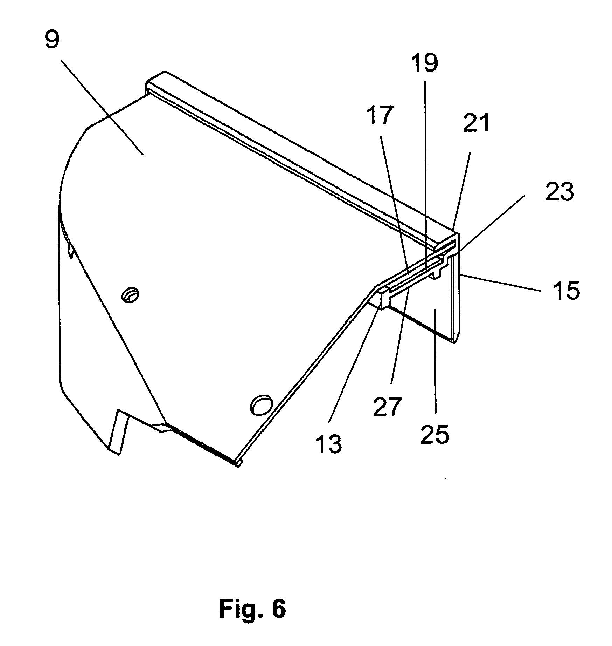

Wie noch deutlicher aus der in Fig. 6 dargestellten Ansicht hervorgeht, ist an der Außenseite des ersten Schenkels 13 ein Kanal 19 ausgebildet, in dem das Spannband 17 umlaufend angeordnet ist. Durch diesen Kanal wird eine seitliche Bewegung des Spannbandes 17 im eingebauten Zustand zusätzlich verhindert. Im Bereich des Scheitels der winkelförmigen Profilleisten 7 ist zusätzlich ein winkelförmiger Außenfortsatz 21 ausgebildet, so dass sich eine U-förmige Ausnehmung ergibt, die nach hinten hin offen ist und zur Aufnahme der Rückwand 9 dient. Zudem ist im Bereich des Scheitels der Profilleisten 7 innenseitig eine parallel zum zweiten Schenkel 15 verlaufende Rille 23 ausgebildet, die zum Aufstecken auf einen Ausrichtrahmen 25 dient. Dieser Ausrichtrahmen 25 ist üblicherweise aus einem dünnen Blech gebildet und dient in erster Linie zur Ausrichtung der Profilleisten 7 vor dem Spannvorgang. Allerdings können sich bei Einsatz von Ausrichtrahmen 25, die nach innen hin über den zweiten Schenkel 15 vorstehen, aufgrund des entstehenden Passepartout-Effekts zusätzlich ästhetische Gesichtspunkte verwirklichen lassen. Dieser Ausrichtrahmen 25 kann auch in einer beliebigen Farbe gefärbt sein. An der Innenseite des ersten Schenkels 13 einer jeden Profilleiste 7 ist außerdem ein innerer Kanal 27 ausgebildet, der zur Befestigung und Halterung der Anzeigeeinheit 3 dient.

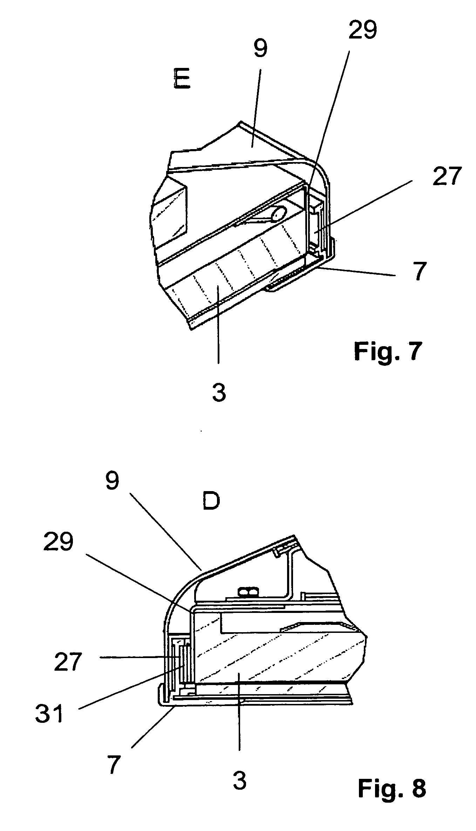

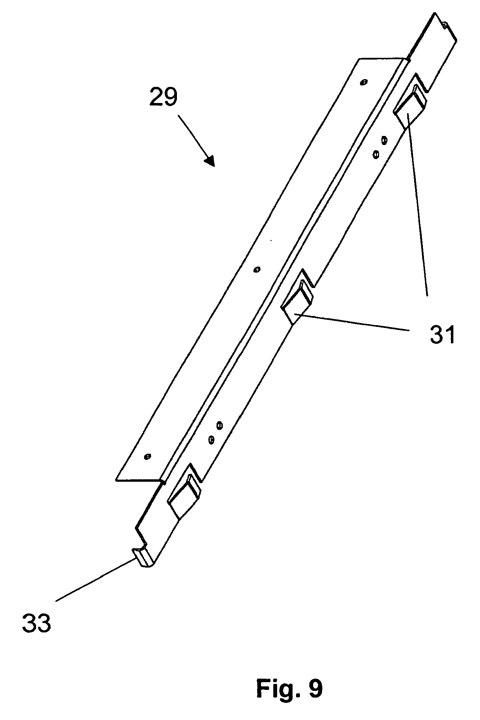

Wie in den vergrößerten Darstellungen in Fig. 7 und 8 deutlich wird, ist die Anzeigeeinheit 3 mit einer Halterungsleiste 29, üblicherweise über Schraubverbindungen, verbunden. Die Halterungsleisten, von denen ein Beispiel in Fig. 9 abgebildet ist, dienen zum Ineinandergreifen mit den Profilleisten 7 des Rahmens 5. Um eine besonders einfache Verbindung zu erhalten, sind an einem Schenkel der winkelförmigen Halterungsleisten 29 nach außen abstehende Federzungen 31 ausgebildet, die in den Kanal 27 an der Innenseite des ersten Schenkels 13 der Profilleisten 7 passen. Durch diese Anordnung wird eine Fixierung der Anzeigeeinheit 3 am Rahmen 5 bezüglich einer Bewegung nach vorne und hinten sowie nach rechts und links erreicht. Es können an allen vier Seiten der Anzeigeeinheit 3 derartige Halterungsleisten 29 angeordnet sein, allerdings reicht es auch aus, lediglich an den zwei gegenüberliegenden Seiten derartige Halterungsleisten 29 anzubringen, wenn zusätzlich auch für eine Fixierung in Richtung nach oben und unten gesorgt wird, etwa durch an den Längsenden der Halterungsleisten 29 ausgebildete Nasen 33.

Bei einer derartigen Ausgestaltung erfolgt der Zusammenbau besonders einfach auf folgende Weise. Zunächst werden die Halterungsleisten 29 an mindestens zwei gegenüberliegenden Seiten der Anzeigeeinheit 3 befestigt. Anschließend werden die Profilleisten 7 von außen auf den Ausrichtrahmen 25 aufgesteckt, wobei gleichzeitig die Federzungen 31 der Halterungsleisten 29 im Kanal 27 aufgenommen werden. Ein Spannband 17 wird im Kanal 19 außen umlaufend um die ersten Schenkel 13 der Profilleisten 7 angeordnet und mit einer an sich bekannten Vorrichtung festgezogen und zu einem geschlossenen Band zusammengefügt. Im Anschluss daran muss lediglich noch die Rückwand 9 in die dafür vorgesehenen Ausnehmungen eingesteckt und mit beliebigen Verbindungselementen an den Halterungsleisten 29 bzw. der Anzeigeeinheit 3 befestigt werden.

Ebenso sind durch das auf der Außenseite umlaufende Spannband 17 konventionelle Befestigungsmethoden der Rückwand 9 bzw. der Anzeigeeinheit 3 nach erfolgter Fertigung des Rahmens 5 denkbar, z.B. durch Verschraubung. Es ist auch möglich, lediglich eine vorläufige Ausrichtvorrichtung anstelle des integrierten Ausrichtrahmens vorzusehen, die nach erfolgtem Zusammenbau des Rahmens 5 wieder demontiert werden kann.

Somit wurde durch die vorliegende Erfindung eine Bildanzeigevorrichtung geschaffen, die besonders einfach und flexibel zusammengebaut und auch wieder auseinandergenommen werden kann, die zudem kostengünstig ist und eine sichere und dauerhafte Fixierung der Bauteile ermöglicht.

## Patentansprüche

1. Bildanzeigevorrichtung (1) mit einer Anzeigeeinheit (3), einem Rahmen (5) zur Umrahmung der Anzeigeeinheit (3) sowie einer Rückwand (9), wobei die Anzeigeeinheit (3) und die Rückwand (9) mit dem Rahmen (5) verbunden ist und wobei der Rahmen (5) aus länglichen Profilleisten (7) gebildet ist, die an ihren Stirnseiten miteinander verbunden sind und mittels eines Spannbands (17) zusammengehalten werden, wobei die Profilleisten (7) im wesentlichen winkelförmig mit einem ersten (13) und einem zweiten Schenkel (15) ausgebildet sind,
**dadurch gekennzeichnet, dass**
das Spannband auf dem ersten Schenkel (13) der Profilleisten (7) außen umlaufend angeordnet ist und dass im Bereich des Scheitels einer Profilleiste (7) ein winkelförmiger Außenfortsatz (21) zum Bilden einer Ausnehmung vorgesehen ist, in die die Rückwand (9) eingeführt ist.

2. Bildanzeigevorrichtung (1) nach Anspruch 1, **dadurch gekennzeichnet, dass** der erste Schenkel (13) an seiner Außenseite einen Kanal (19) aufweist, in dem das Spannband (17) verläuft.

3. Bildanzeigevorrichtung (1) nach Anspruch 1 oder 2, **dadurch gekennzeichnet, dass** die Stirnseiten der Profilleisten (7) unter einem Winkel von etwa 45° abgeschrägt sind, so dass sich eine 90°-Außenkante zwischen aneinandergrenzenden Profilleisten (7) ergibt.

4. Bildanzeigevorrichtung (1) nach einem der vorangehenden Ansprüche, **dadurch gekennzeichnet, dass** das Spannband (17) aus Kunststoff gebildet ist.

5. Bildanzeigevorrichtung (1) nach einem der vorangehenden Ansprüche, **dadurch gekennzeichnet, dass** die Anzeigeeinheit (3) mittels der Kraft des Spannbandes (17) von mindestens zwei ersten Schenkeln (13) der Profilleisten (7) fixiert und gehalten wird.

6. Bildanzeigevorrichtung (1) nach einem der vorangehenden Ansprüche, **dadurch gekennzeichnet, dass** Halterungsleisten (29) an der Anzeigeeinheit (3) befestigt sind, die in Eingriff mit einem Kanal (27) an der Innenseite des ersten Schenkels (13) der Profilleisten (7) stehen.

7. Bildanzeigevorrichtung (1) nach Anspruch 6, **dadurch gekennzeichnet, dass** die Halterungsleisten (29) nach außen gerichtete Federzungen (31) aufweisen, die im Kanal (27) an der Innenseite des ersten Schenkels (13) der Profilleisten (7) festgelegt sind.

8. Bildanzeigevorrichtung (1) nach einem der vorangehenden Ansprüche, **dadurch gekennzeichnet, dass** im Bereich des Scheitels einer Profilleiste (7) innenseitig eine Rille (23) vorgesehen ist, in die ein Ausrichtrahmen (25) eingeführt ist.

## Claims

1. Image display device (1) having a display unit (3), a frame (5) for framing the display unit (3) as well as a rear wall (9), the display unit (3) and the rear wall (9) being connected to the frame (5), and the frame (5) being composed of elongate profile strips (7) which are connected to each other at their end faces and held together by means of a clamping strip (17), the profile strips (7) being substantially angle-shaped with a first arm (13) and a second arm (15), **characterised in that** the clamping strip is arranged on the first arm (13) of the profile strips (7), running round the outside, and **in that** in the region of the apex of a profile strip (7) is provided an angle-shaped outer extension (21) for forming a recess into which the rear wall (9) is introduced.

2. Image display device (1) according to claim 1,
**characterised in that** the first arm (13) has on its outer side a channel (19) in which the clamping strip (17) runs.

3. Image display device (1) according to claim 1 or 2, **characterised in that** the end faces of the profile strips (7) are bevelled at an angle of about 45°, so that a 90° outer edge is formed between adjoining profile strips (7).

4. Image display device (1) according to any of the preceding claims, **characterised in that** the clamping strip (17) is made of plastic.

5. Image display device (1) according to any of the preceding claims, **characterised in that** the display unit (3) is fixed and held by at least two first arms (13) of the profile strips (7) by means of the force of the clamping strip (17).

6. Image display device (1) according to any of the preceding claims, **characterised in that** attached to the display unit (3) are support strips (29) which are engaged with a channel (27) on the inside of the first arm (13) of the profile strips (7).

7. Image display device (1) according to claim 6, **characterised in that** the support strips (29) have outwardly directed spring tabs (31) which are fixed in the channel (27) on the inside of the first arm (13) of the profile strips (7).

8. Image display device (1) according to any of the preceding claims, **characterised in that** in the region of the apex of a profile strip (7) on the inside is provided a groove (23) into which is introduced an aligning frame (25).

## Revendications

1. Dispositif d'affichage d'images (1) comprenant une unité d'affichage (3), un cadre (5) pour l'encadrement de l'unité d'affichage (3), ainsi qu'un panneau arrière (9), l'unité d'affichage (3) et le panneau arrière (5) étant assemblés avec le cadre (5) et le cadre (5) étant formé de barres profilées allongées (7), qui sont assemblées entre elles sur leurs côtés frontaux et sont maintenues au moyen d'une bande de serrage (17), les barres profilées (7) étant configurées essentiellement en équerre avec une première branche (13) et une seconde branche (15),
**caractérisé en ce que**
la bande de serrage est disposée extérieurement, de façon périphérique, sur la première branche (13) des barres profilées (7), et qu'un prolongement extérieur (21) en équerre est prévu dans la zone du sommet d'une barre profilée (7) pour former un creux, dans lequel est introduit le panneau arrière (9).

2. Dispositif d'affichage d'images (1) suivant la revendication 1, **caractérisé en ce que** la première branche (13) présente sur son côté extérieur un canal (19), dans lequel s'étend la bande de serrage (17).

3. Dispositif d'affichage d'images (1) suivant l'une des revendications 1 et 2, **caractérisé en ce que** les côtés frontaux des barres profilées (7) sont chanfreinés sous un angle d'environ 45°, de sorte qu'il en résulte une arête extérieure de 90° entre des barres profilées (7) limitrophes les unes aux autres.

4. Dispositif d'affichage d'images (1) suivant l'une des revendications précédentes, **caractérisé en ce que** la bande de serrage (17) est formée de matière plastique.

5. Dispositif d'affichage d'images (1) suivant l'une des revendications précédentes, **caractérisé en ce que** l'unité d'affichage (3) est fixée et maintenue au moyen de la force de la bande de serrage (17) d'au moins deux premières branches (13) des barres profilées (7).

6. Dispositif d'affichage d'images (1) suivant l'une des revendications précédentes, **caractérisé en ce que** des barres de retenue (29) sont fixées sur l'unité d'affichage (3), lesquelles barres sont en prise avec un canal (27) sur le côté intérieur de la première branche (13) des barres profilées (7).

7. Dispositif d'affichage d'images (1) suivant la revendication 6, **caractérisé en ce que** les barres de retenue (29) comportent des languettes élastiques (31) dirigées vers l'extérieur, qui sont fixées dans le canal (27) sur le côté intérieur de la première branche (13) des barres profilées (7).

8. Dispositif d'affichage d'images (1) suivant l'une des revendications précédentes, **caractérisé en ce qu'**une gorge (23), dans laquelle est introduit un cadre de positionnement (25), est prévue du côté intérieur dans la zone du sommet d'une barre profilée (7).
